# EUROPEAN PATENT SPECIFICATION

(11) **EP 1 660 819 B1**
(45) Date of publication and mention of the grant of the patent: **07.02.2007**
(21) Application number: 04745242.0
(22) Date of filing: 30.07.2004
(51) Int. Cl.: F24C 1/16, F24C 3/14, F24C 5/20, F24C 7/10, F24C 15/26, A47J 37/07

(54) **KITCHEN FURNISHING ACCESSORY FOR OUTDOOR AND INDOOR USE, PROVIDED WITH AN INTERCHANGEABLE HOB, SUPPORTED BY A MODULAR SUPPORT STRUCTURE**
KÜCHENMÖBELZUBEHÖR FÜR VERWENDUNG IM FREIEN UND IN INNENRÄUMEN, DAS MIT EINER AUSTAUSCHBAREN KOCHFLÄCHE VERSEHEN IST UND DURCH EINE MODULARE STÜTZKONSTRUKTION GESTÜTZT WIRD
ACCESSOIRE DE MOBILIER DE CUISINE DU TYPE EXTERIEUR/INTERIEUR, AVEC EQUIPEMENT DE CUISSON ET SUPPORT MODULAIRE DE BLOC CHAUFFANT INTERCHANGEABLE

(30) Priority: 01.08.2003 IT TV20030110
(43) Date of publication of application: 31.05.2006
(73) Proprietor: Emme Group S.R.L., 36055 Nove (VI) (IT); Piemme SRL Forniture Termotecniche Industriali, 36055 Nove (VI) (IT)
(72) Inventor: MENEGON, Dario, I-36061 Bassano del Grappa (VI) (IT)
(74) Representative: Terreran, Gabrio
(86) International application number: PCT/IT2004/000429
(87) International publication number: WO 2005/012798

(56) References cited:
- DE-A- 3 824 413
- DE-U- 20 111 703
- FR-A- 774 427
- FR-A- 830 717
- US-A- 1 743 072
- US-A- 3 107 663
- US-A- 4 108 142
- US-B1- 6 615 821

## Description

The present invention concerns a kitchen furnishing accessory for cooking foods, of the outdoor/indoor type, on wheels or for a fixed position.

### FIELD OF APPLICATION OF THE INVENTION

The particular if not exclusive application of the invention is in the field of equipment for catering, banqueting, restaurants, and generally also for interior furnishing.

In the sector of providing food and beverages, in the latitude of this country and especially during the seasons of the year when the climate is mild, ample use is made of equipment specifically designed for cooking food in the open air. This pleasant custom, typical of Anglo-Saxon countries, is gradually becoming popular, to the extent that it is not only used for outdoor catering or for outdoor community purposes such as catering and banqueting, but also to satisfy the desires of an ordinary family with a suitable space at their disposal.

The advantages of cooking foods outdoors are many, ranging from the possibility of cooking food without the inevitable accumulation of dirt and smell inside the building, to the possibility of receiving simultaneously and in the open a quite considerable number of people. Then, in the practice of this custom, there is a more subtle pleasure which refers substantially to the fact that the consumer appreciates what he eats more, if he is in the condition to observe master cooks at work, preparing the meals.

These and other aspects, even sometimes rather choreographic, are encouraging companies working in the sector to seek innovative solutions, many from the aesthetic point of view and many others from the functional point of view.

In this field, barbecues and cookers for outdoor use are known. Both the former and the latter make use of gas supply systems, mostly of the type using LPG (Liquefied Petroleum Gas) which is formed of a variable mixture of a number of hydrocarbons, such as propane and small percentages of propylene, butane and small percentages of butylenes. The advantages of LPG lie in the fact that it can be liquefied with moderate pressures and in this condition (liquid phase) it is easy to store and handle, since its volume in the liquid phase is about 250 times less than the volume of the gas. The conventional packaging of LPG, in the liquid phase, is constituted of certified movable metal containers, better known as "cylinders", with different capacities, so that these cylinders must always follow both the barbecue and, even more, the equipped cookers. In some cases there is a housing for the cylinders, mostly of an improvised type, located under the cooking surface, in other cases they may be in compartments separate from the cooking equipment, and connected to the cooker by convenient extension pipes. Other solutions may contemplate the connection of the equipment to the existing mains supply in the building, with fittings which allow it to be used outside. In short, there are many different solutions for supplying the cooking surface, but the most common is still the classic cylinder of LPG.

### STATE OF THE ART

In the state of the art, barbecue grills of cylindrical shape are disclosed, as exemplary shown in DE 3 824 413 A or DE 20111 703 U.

The traditional barbecues fall within this field of use. For example CA2321121 (Goran) describes a barbecue, composed of two sides perpendicular to the ground, on which may be fixed the lateral ends of a V-shaped pan on top of which rests the cooking grill. The lower part is equipped with a gas burner, or with an electric heater.

Also US6182560 (Andress) suggests a barbecue which, unlike the previous one, is composed of four traditional legs, hinged at the ends, which support the parallelepiped shaped pan that supports the cooking grill. At the sides of said pan are placed flame guards, each one of which may in turn support further grills. Finally there is a hood which in conditions of use is placed on the back or used to close the barbecue, in the event of its being used as an oven. The equipment concerned is of the type fed with gas, so it is provided with at least one burner in the pan and may be equipped with a series of accessories, such as a spit, additional grills and other items.

Alternative solutions in which barbecues with a different cooking system are proposed, in this case a combined system, are described for example in US6167797 (Bollich). In this hypothesis the transportable barbecue, with an unusual chalet shape, has a cooking chamber on several levels and is provided with a device for cooking by convection, with means for boiling food, frying, and also for steam cooking.

US5413087 (Jean) suggests a barbecue with a round shape. In greater detail, it is composed of a container, essentially circular in shape, inside which is fitted the burner, fed by gas in a conventional way. The container supports a grill and, on top of this, a possible lid, also circular, which can be closed down on said container. Of the same kind is ES2129296 (Home), which proposes a barbecue, of the type with a semi-spherical base, provided with respective burner associated with a trolley structure. The semi-spherical base comes with a respective cover as closure.

### STATE OF THE ART CLOSE TO THE INVENTION

US4681083 (Shu) describes an appliance for cooking, toasting, roasting and barbecuing, and a respective heating device. In greater detail, the structure considered has a hob composed of a container which has a bottom, two sides and a back, on which structure two burners are fitted on the bottom. A first burner of the type for conventional flame with a single gas dispenser, circular in shape, and a second of the type for flame with a lengthwise development, with a rectilinear dispenser of tubular type. Both have supporting elements on top for cooking pots, circular in the first case, rectangular in the second hypothesis. The front part of the apparatus, along the bottom, is of the type with conventional knobs for controlling the gas supply flow and with related devices to support piezoelectric ignition.

Said hob may be supported and anchored to modular sub-structures, made mostly of wood but also of metal, which are composed of four or more rectilinear uprights, held together by transverse elements, with the aid of one or more orthogonal shelves. The bottom part of the uprights may be provided with only wheels, only feet, or alternatively mixed solutions. In some cases, where metal support structures are provided, there may be a metal door, generally on the front, which allow access to a rectangular compartment under the hob, surrounded by enclosing walls round the perimeter.

### INCONVENIENCES

The following problems may be summed up for the solutions illustrated above.

First of all the known cooking appliances do not allow the user the possibility, after buying them, of replacing the burners or arranging them differently. It is certain, in fact, that once the appliance has been made with a determined type of burners, for example a grill on one side with underneath a container for lava stone heated by means of a conventional tubular burner, and on the other a griddle pan, also heated by means of a conventional tubular burner, there is no convenient possibility of replacing the original burners with others, which obviously results in a different formation of the element that supports cooking pots. This is the typical case of an appliance for cooking outdoors, which in some cases may require other functions in addition to the usual ones, such as arranging burners for a fish pan, for a fryer, or even for a paella pan.

It is therefore clear how in the situations the user must provide himself with a lot of equipment, one for each specific type of hob, as many as the different dishes to be prepared. This results in problems of transport, installation and objective bulk of the equipment and of the respective material in the case of catering and banqueting, and other problems, while for the individual user it will impose an evident limit on the expression of his cooking abilities, with relation to the different types of dishes to be prepared, since he can use the cooker only for those dishes for which the hob is predisposed. Otherwise he will have to act empirically, where possible, making evident compromises as regards the quality of the food prepared. The alternative, also for the individual user or in the home, would be to provide himself with as many cooking appliances as the dishes for which it is prepared, but it is clear that the cost of the equipment makes it impossible to propose such a choice, also because they are not used regularly.

Also in the case of providing food for communities, when the cooker is fed with LPG, in the best of cases the cylinder is located in the area immediately below the hob. In the known appliances, these are shelves obtained substantially in view, near the base of the structure, where the cylinders remain completely in view or at the most behind a covering cloth or panel which partly conceals the front of the appliance itself in the area below the hob. On the practical side, besides the appreciable ugly aesthetic effect, during movement of the cooking appliance the cylinder may suddenly fall, damaging the individual devices of which it is composed and also the surrounding support structure itself. Another inconvenience lies in the fact that the compartment that may be provided for housing the cylinder has a common surface with a rectangular plan, without any subdividing partition. In other words, the space of the shelf which acts as cylinder holder is common with the adjacent surface intended for holding dishes and other items, with the consequence that the subdivision of the surface itself is not rational, resulting in a considerable loss of usable space.

With regard to the parallelepiped support structures of the hobs, which are an integral part of the cooking appliance, they are mostly made of wooden components, which are essentially formed of at least four uprights, to which are joined transverse connecting elements and one or more shelves orthogonal to said uprights. At least two of the four uprights, in one of the possible configurations, have wheels fitted onto the respective ends, so that the cooking appliance is of the mobile type, such as the conventional barbecue; in other cases the wheels may be on all four bottom ends of the uprights, or on none of them, giving a stable support. The solutions just described require ordinary nuts and bolts for assembly, so that the interaction of the wood material with the above-mentioned fixing means does not ensure the necessary stability of the whole. It is a well-known fact that, though of a pleasant appearance, wood is a living material and is delicate by nature, tending to deform and to yield locally at the corresponding fixing points, especially in the case of the appliance remaining exposed to changeable weather conditions. These situations give rise to unstable, delicate structures, which require constant, accurate maintenance.

Another inconvenience, related to solutions in which a hob support structure on wheels is used, concerns the handles for moving it. Usually these handles are fitted on the short sides of the cooking appliance which correspond to the heads or sides of the support structure, so that the user is able to push or pull the trolley more easily. However the handles and respective supports are quite often inadequately positioned and secured, with the tendency to yield locally, or the fixing system works loose when under stress. This occurs especially when moving the trolley structure of the type with only two wheels, as it is first necessary to raise said structure by the side with feet, so as to be able to move it. As the weights are not negligible, it is clear that, since the handles are projecting, they are particularly subject to yielding, requiring constant and specific operations to repair or reinforce them. Similar remarks can also be made about the hob support structures completely on wheels. In this case, the known solutions do not offer alternative handles to the conventional ones, so that their movement is not easy, due to the fact that they are located at the two opposite ends of the structure on wheels.

### BRIEF DESCRIPTION OF THE INVENTION

These and other aims are achieved with the present invention according to the characteristics described in the annexed claims, solving the problems shown by means of a kitchen furnishing accessory, of the outdoor/indoor type, provided with an appliance for cooking food and with a modular support structure of the interchangeable hob, which hob support structure is composed of at least three tubular uprights, where, at the lower end, a bottom is fitted, surrounded around the edge by side panels also anchored to said uprights, and a door, hinged at the side, said panels and said door being curved. On the upper part of the modular structure, the hob is fitted onto the upper ends of said uprights, said hob comprising essentially a circular plate, the heating and cooking means, for example in the form of a burner, electric elements or other means, and the respective controls for controlling the working temperature, positioned along the front of the hob assembly. Lastly, projecting from said hob support structure is a ring-shaped element acting as a peripheral handle, without any interruption. Said support structure may be integrated in a more complex furnishing element, which substantially provides other functions, such as an oven, refrigerator, freezer, dishwasher, or simply a compartment with shelves, and a sink function, these last functions may be provided between two similar structures each supporting a respective hob, which hob, being interchangeable, may also be of the type with a different configuration from the opposite one.

### AIMS

In this way, through the considerable creative contribution, the effect of which constitutes an immediate technical progress, certain aims are achieved.

A first aim consisted of realising a cooking appliance in which it is easy and possible to replace only the hob rapidly with another hob that has a different number and/or a different configuration of the heating means, for example the burner with the respective control device, considered an accessory element. In this way it is possible to vary the theme of the lunch, dinner or buffet rapidly, leaving ample room to the imagination of the cooks.

A second aim consisted of realising a modular appliance, in which the hob support structure is obtained with a small number of components, preferably of steel, obtained by laser cutting, with tubular uprights, side definition panels, access door, and various anchoring elements, easy to assemble, so as to keep codes to a minimum and achieve better rationalisation of stock management.

A third aim consisted of exploiting the available spaces rationally, keeping down bulk. This was made possible by choosing a circular shape for the configuration of the individual hob support structure. More particularly, as regards the compartment for housing the cylinder the shape is the one best suited, considering the circular shape of the cylinder itself, at the same time allowing the cylinder housing compartment to be separated from other adjacent compartments, which may be assigned to other interesting functions, for example to store plates and other items.

A fourth aim was to propose a support structure that would be versatile in its various combinations, which could be proposed in a single version or in a combined version with a second, similar structure, suited, as has already been seen, for a different type of hob, for example a grill for meat or fish, a paella pan, fryer, oven. In the last case the central portion may be equipped differently, with an oven, dishwasher, refrigerator, or alternatively even with open shelves, while the upper part can comprise a sink or, alternatively, be equipped as a counter and refrigerated counter for serving beverages, even with draught distribution devices.

A fifth aim allowed the realisation of a cooking appliance which is integrated in a kitchen furnishing unit for outdoor/indoor use, and may be either of the mobile type or of the stable type, with a fixed position, for setting inside a building, or outside, such as on terraces, porches and other sites.

A sixth aim was to realise a projecting perimeter ring, in the form of a continuous handle, conventionally called "Hula Hoop", which, besides acting as an ergonomic element for pushing or pulling the structure, if it is on wheels, is particularly suited to act as a safety element, as it keeps the user at a due distance from the hobs. The perimeter ring is also convenient for the user, as it may be used to hang all round the unit a whole series of accessories that usually assist the work of the cook, such as cooking forks, all kinds of spoons, oil and spice rack and other items.

A further aim was to obtain a sturdy structure that would resist different meteorological conditions. It was possible to achieve this aim by using steel to make the essential components of the hob support structure.

These and other advantages and aims will appear from the following detailed description of some preferred embodiments, with the aid of the enclosed schematic drawings, the details of which are given by way of illustration, but not in any way limiting.

### CONTENT OF THE DRAWINGS

Figure 1 is a front view of a single hob support structure, of a cooking appliance on wheels.
Figure 2 is an overhead view of the hob support structure in Figure 1.
Figure 3 is an exploded view of the hob support structure in Figures 1 and 2.
Figure 4 is a detailed view of the upper end of an upright and of the respective anchoring device of the ring which surrounds the cooking appliance on wheels.
Figure 5 is a front view of a variation to the hob support structure in Figure 1, of the type with two hob support structures, integrated in a furnishing unit.
Figure 6 is an on overhead view of the variation in Figure 5.
Figure 7 is an axonometric view of the variation in Figure 5 with some of the interchangeable hobs.

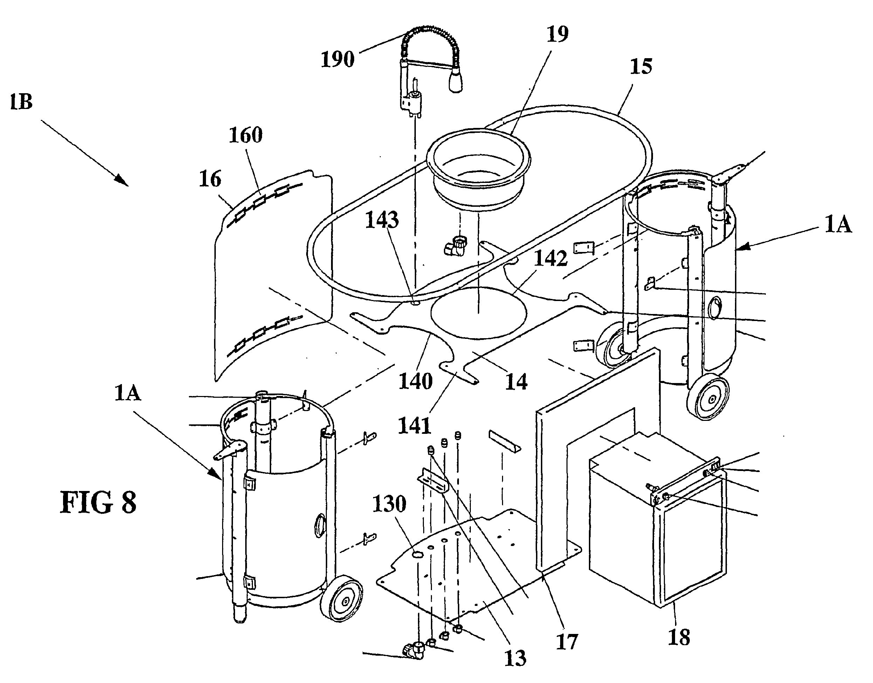

Figure 8 is an exploded view of the variation in Figure 5.

### PRACTICAL DESCRIPTIONS OF EMBODIMENTS OF THE INVENTION

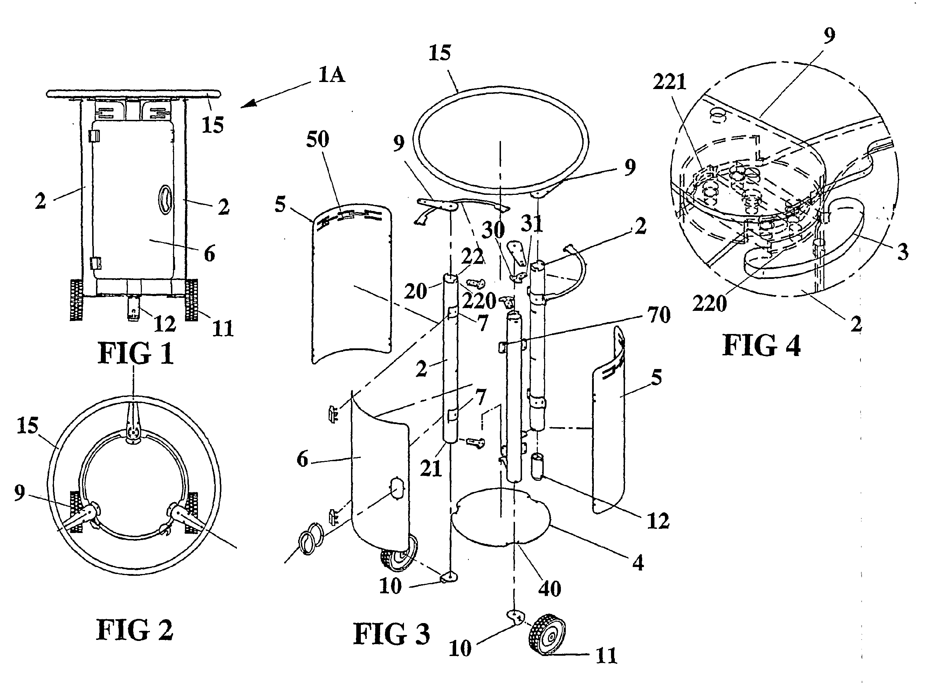

With reference also to the figures, a first furnishing accessory for cooking **1A** (Fig. 1) is described. This particular case is a support structure composed of three tubular and rectilinear uprights **2,** preferably of steel, which tubular uprights act as legs and are placed at 120° to each other. Said uprights **2,** at each end, respectively upper **20** and lower **21,** realise a double shoulder **22,** one diametrically opposite the other, where at least one is provided with a slot **220** for receiving transversely an anchoring tab **3.** Said anchoring tab **3** is a substantially flat metal element with one end **30** wider than the opposite end **31,** which is inserted through said slot **220,** so that the end engages in a corresponding seat **221** obtained in the shoulder **22** opposite the one in where there is the slot **220.** In this way, the end **30** protrudes perpendicularly with respect to each upright **2** and on the internal side of the support structure. The function of said anchoring tabs **3** applied on the lower end **21** of the uprights **2** is to support the circular bottom **4,** along the perimeter of which are seats **40** which partly surround the circumference of the upright **3.** The bottom **4** is therefore resting on the perimeter and is screwed to the tabs **3.** Onto the uprights **2** are fitted curtain panels **5,** respectively two, and a conventional door **6** hinged at the side, in which at least the curtain panels **5** are provided along the upper side with air intakes **50** to favour circulation inside the cylindrical container thus obtained. Both the curtain panels **5** and the conventional door **6** are made of curved steel elements, for example shiny or satin-finished, and are joined to the support structure in such a way as to enclose within them the uprights **2.** In the particular case, the anchoring of the curtain panels **5** and of the conventional door **6** is achieved by means of connecting flanges 7 which have a substantial "U" shape with two protruding wings **70.** More particularly, to each upright **2** correspond two connecting flanges in such a way as to allow the engagement of the curtain panels **5** and of the conventional door **6** along two points for each respective vertical edge. Even more in detail, it is the intermediate portion of the connecting flange **7** which is anchored to the corresponding upright **2** while the two opposite protruding wings **70** allow the engagement of the vertical edges of the curtain panels **5** and of the door **6.**

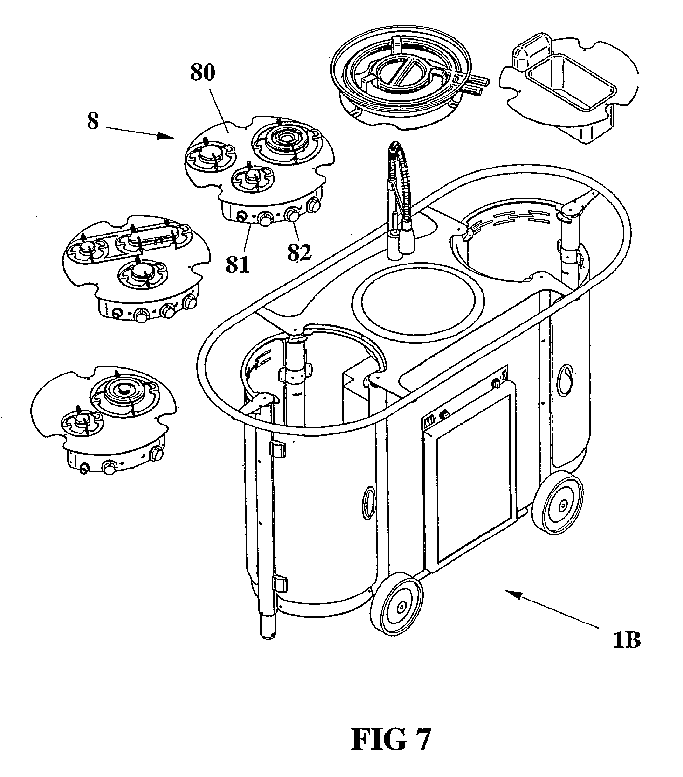

The upper part of the support structure of the furnishing accessory for cooking **1A** contemplates the interchangeable join of the hob **8.** In the particular case, see Figure 7, the hob **8** may be represented by a hob with two burners, with three burners of which one burner for a fish pan, or with two burners and an electric element, or with a paella pan, or a fryer, or a pasta cooker. The hob **8** also has a base plate **80,** also made of steel, to which the heating means is joined. In this case, the base plate **80** surrounds the heating means and is circular in shape, identical to the shape of the bottom **4,** having along the perimeter seats **81** which partly surround the round section of each respective upright **2.** The fixing of the base plate **80** at the ends **20** of the respective uprights **2** is achieved in the same way as for the bottom **4,** providing the same fixing tabs **3** which, projecting and engaged at a right angle to each of the ends **20** of the uprights **2,** allow the peripheral portion of the base plate **80** to rest on them, and therefore allow the plate to be fixed conventionally with ordinary screws. A template **82** is also joined perpendicularly to the base plate **80,** on the under side, which template develops for a portion of circumference corresponding to the sector that lies between an upright **2** and the adjacent upright **2.**

Resting against the shoulders **22** of the upper end **20** of each of the uprights **2** are fixed flat arms **9** which, being at a right angle to the respective upright **2,** project towards the outside of the support structure of the first furnishing accessory for cooking **1A.** Said flat arms **9,** which are therefore arranged radially, support a metal ring **15,** in this case also of tubular steel, conventionally called "hula hoop", which, surrounding the outside of the upper end of the support structure of the first furnishing accessory for cooking **1A,** protects against any risks of accidental contact, is functional for stiffening the whole assembly, and is useful as a handle means for transport and for holding accessories.

In the version in Figure 1, the support structure of the first furnishing accessory for cooking **1A** is configured on wheels. For this purpose it is provided with two brackets **10** in the form of an upside-down "L", fixed to only two uprights **2** with the horizontal fin corresponding to the lower end **21,** while the vertical fin engages the respective wheel **11** made of PVC suitable for foodstuffs. Lastly, the remaining upright **2** is equipped with an adjustable foot **12.**

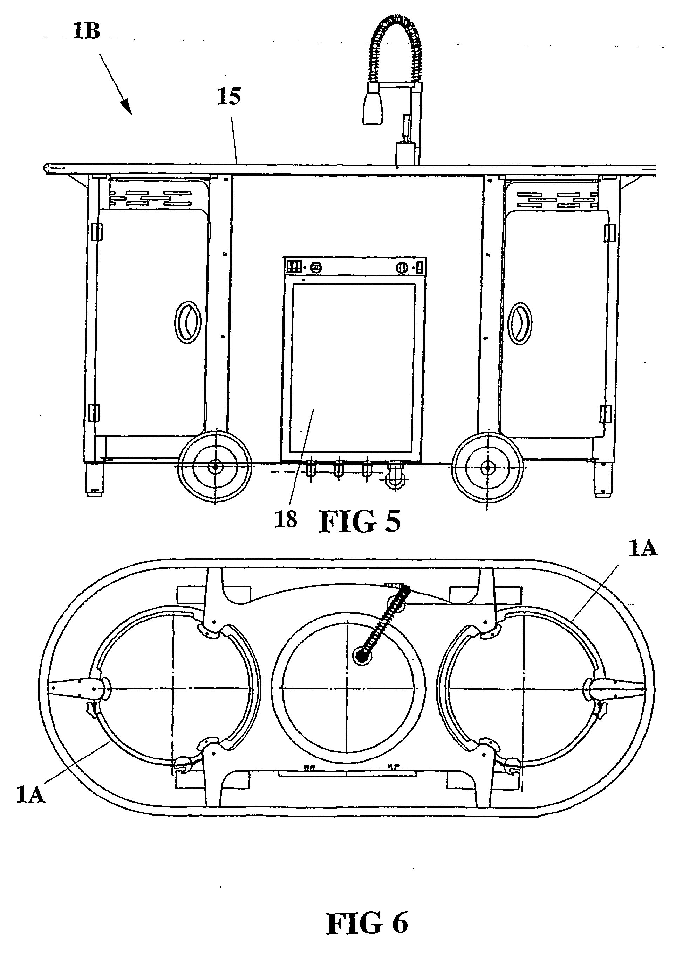

A possible variation of the support structure of the furnishing accessory for cooking **1A** contemplates a combined support structure **1B.** Figure 5 effectively represents this hypothesis. It is substantially composed of a first and a second support structure, both similar to those of the furnishing accessory for cooking **1A**, each of which is without the curtain panel **5** on the side of the two structures that face each other. In this case a bottom **13** is provided which connects at the bottom the two support structures **1A** and a top **14** which connects at the top said two support structures **1A.** As regards the bottom **13,** it has openings **130** at the rear for the passage of possible connections both for pipes and for the electric connection for the supply of the supported accessories, and it is fixed along the side ends at the bottom **4** of each support structure **1A.** The upper connection top **14** is also of the type made of steel and has side ends made in such a way as to provide to opposed semicircular seats **140,** each of which ends with two opposing end peninsulas **141.** These opposing end peninsulas **141** present the same shape as the individual flat arms **9** provided in the single support structure **1A**. In the particular case, for the anchoring and projecting support of the ring **15** each single support structure **1A** uses a single flat arm **9** fixed to the upper end **20** of the upright **2** that faces towards the outside. The other two upper ends **20** of the uprights **2** which face the uprights **2** of the corresponding adjacent support structure **1A** support and engage the opposing end peninsulas **141** and with them the respective upper connecting top **14.** Between the bottom **13** and the upper connecting top **14** there is, in the rear part, a back curtain panel **16** obtained of laser-cut stainless steel, and curved, provided with air intakes **160** along the upper side. In this particular case the front part of the combined structure has a panel **17,** of wood, plastic or even metal, which defines a seat for housing an electric household appliance **18,** which may be an oven, a refrigerator, a dishwasher or other appliance. In a possible variation to the place for the electric household appliance, the compartment thus obtained and which remains between the two support structures **1A,** possibly closed by one or more doors, may also be equipped with technical shelves. Accessory elements may also be provided on the upper connection top **14.** In the particular case it is represented by a large central hole **142,** which allows the support of a sink **19** assisted by corresponding taps **190** fitted by means of a respective hole **143** to the same upper connecting top **14.** In a further variation, instead of the sink **19,** it is possible to contemplate the use of additional cooking appliances which may consist of burners with one or more jets, or griddles, a paella pan, pasta cooker and other items.

Both variations described may also be supplied in the version without wheels, that is with a stable layout, as an element for the interior furnishing of a kitchen. This solution of course does not make use of the wheels **11,** but only of the adjustable feet **12.**

## Claims

1. Kitchen furnishing accessory (1A), of the outdoor/indoor type, provided with an appliance for cooking food and with a modular hob support structure of an interchangeable hob (8), **characterised in that** the modular hob support structure is composed of at least three tubular uprights (2), where, at the lower end, a bottom (4) is fitted, surrounded around the perimeter by at least one vertical curtain panel (5), also anchored to said uprights (2), and a door (6), hinged at the side, said panel (5) and said door (6) being curved, and where, at the upper part of the modular hob support structure, the interchangeable hob (8) is fitted onto the upper ends of said uprights (2), comprising a circular plate (80), heating and cooking means, and respective controls for controlling the working temperature of the heating and cooking means, positioned along the front of the hob (8).

2. Kitchen furnishing accessory, of the outdoor/indoor type, according to claim 1, **characterised in that** a ring element (15) is positioned projecting from at least one hob support structure.

3. Kitchen furnishing accessory, of the outdoor/indoor type, according to claim 1 and 2, **characterised in that** said modular hob support structure is integrated in a furnishing accessory which has a second hob support structure.

4. Kitchen furnishing accessory, of the outdoor/indoor type, according to the previous claims, **characterised in that** the furnishing accessory which is composed of two hob support structures joined together by connecting means, has an intermediate area intended for other functions, such as the function of an oven, refrigerator, freezer, dishwasher, pr simply a compartment with shelves, and on the top the function of sink or of an additional hob, these being possibly positioned between said two analogous support structures, each of a corresponding hob, wherein said hob, being interchangeable, may also be of the type with a different configuration from the opposite one.

5. Kitchen furnishing accessory, of the outdoor/indoor type, according to the previous claims, **characterised in that** wheels (11) are fitted at each lower end of at least two uprights (2).

6. Kitchen furnishing accessory, of the outdoor/indoor type, according to the previous claims, **characterised in that** at least one upright (2) has an adjustable foot (12) at the lower end.

7. Kitchen furnishing accessory, of the outdoor/indoor type, according to the previous claims, **characterised in that,** at each end of each upright (2), respectively upper (20) and lower (21), there is a double shoulder (22), one diametrically opposite the other, where at least one shoulder has a slot for receiving transversely an anchoring tab (3), which projects with respect to said upright (2) with a wide supporting end at a right angle to said upright.

8. Kitchen furnishing accessory, of the outdoor/indoor type, according to claim 7, **characterised in that** said anchoring tab (3) is a substantially flat metal element with a protruding end wider than the opposite end which is fixed to the shoulder, where at the upper end (20) of the uprights (2) it provides peripheral support for the circular plate (80) which forms the hob (8).

9. Kitchen furnishing accessory, of the outdoor/indoor type, according to the previous claims, **characterised in that** the circular plate (80), which forms the hob (8) and supports the heating and cooking means, has along a sector of the same the respective controls for controlling the working temperature of the heating and cooking means.

10. Kitchen furnishing accessory, of the outdoor/indoor type, according to the previous claims, **characterised in that** the curtain panels (5) of the support structure are joined to the uprights (2) by connecting flanges (7) with a "U" shape.

11. Kitchen furnishing accessory, of the outdoor/indoor type, according to the previous claims, **characterised in that** the circular plate (80) which forms the hob and supports the heating and cooking means, has along it two semicircular seats, each of which surrounds the profile of the respective upright (2) to which it is joined.

12. Kitchen furnishing accessory, of the outdoor/indoor type, according to the previous claims 2-11, **characterised in that** the ring element (15) surrounds the furnishing accessory (1A).

13. Kitchen furnishing accessory, of the outdoor/indoor type, according to the previous claims, **characterised in that** the combined support structure is composed of a first and a second support structure, each of which is without the curtain panel on the side of the two structures that face each other and that are connected to each other by a bottom (13) which connects the two support structures at the lower part, by a top (14) which connects said two support structures at the upper part, and a back (16).

14. Kitchen furnishing accessory, of the outdoor/indoor type, according to claim 13, **characterised in that** the bottom (13) has openings (130) at the rear for the passage of possible connections both for pipes and for the electric connection for the supply of the supported accessories, and it is fixed along the side ends at the bottom (13) of each support structure, while the upper connecting top (14) has its side ends made in such a way as to have two opposed semicircular seats (140, 142), each one of which ends with two opposing end peninsulas, said peninsulas being engaged at the upper end (20) of two uprights (2).

15. Kitchen furnishing accessory, of the outdoor/indoor type, according to claim 7, **characterised in that** against the shoulders (22) of the upper end (20) of at least one of the uprights (2) is fixed a flat arm (9) which, being at a right angle to the respective upright (2), projects towards the outside of the support structure of a first furnishing accessory (1A) for cooking and supports a ring (15) which surrounds, on the outside, the upper end of the support structure of the furnishing accessory (1A) for cooking.

## Patentansprüche

1. Zusatzelement für die Kücheneinrichtung (1A) für den Innen-/Außenbereich mit einem Gerät zum Garen von Speisen und mit einer modularen Kochmulden-Tragstruktur einer austauschbaren Kochmulde (8), **dadurch gekennzeichnet, dass** die modulare Kochmulden-Tragstruktur aus wenigstens drei röhrenförmigen Ständern (2) besteht, in die am unteren Ende ein Boden (4) eingesetzt ist, welcher an seinem Umfang entlang umgeben ist von wenigstens einem senkrechten, ebenfalls an den Ständern (2) befestigten Verkleidungspaneel (5) und einer seitlich angelenkten Tür (6), wobei das Paneel (5) und die Tür (6) gekrümmt sind und wobei im oberen Teil der modularen Kochmulden-Tragstruktur die austauschbare Kochmulde (8) an den oberen Enden der Ständer (2) eingesetzt ist und eine runde Platte (80), Heiz- und Gareinrichtungen und entsprechende an der Vorderseite der Kochmulde (8) angeordnete Bedienelemente zur Kontrolle der Betriebstemperatur der Heiz- und Gareinrichtungen sind umfasst.

2. Zusatzelement für die Kücheneinrichtung für den Innen-/Außenbereich gemäß Patentanspruch 1, **dadurch gekennzeichnet, dass** aus wenigstens einer Kochmulden-Tragstruktur ein Ringelement (15) herausragend positioniert ist.

3. Zusatzelement für die Kücheneinrichtung für den Innen-/Außenbereich gemäß Patentanspruch 1 und 2, **dadurch gekennzeichnet, dass** die modulare Kochmulden-Tragstruktur in ein Zusatzelement für die Kücheneinrichtung integriert ist, das eine zweite Kochmulden-Tragstruktur aufweist.

4. Zusatzelement für die Kücheneinrichtung für den Innen-/Außenbereich gemäß den vorstehenden Patentansprüchen, **dadurch gekennzeichnet, dass** das aus zwei durch Verbindungsmittel miteinander verbundenen Kochmulden-Tragstrukturen zusammengesetzte Einrichtungs-Zusatzelement einen mittleren, für andere Funktionen bestimmten Bereich aufweist, wie etwa jene eines Ofens, Kühlschranks, Gefrierschranks, Geschirrspülmaschine oder einfach ein Fach mit Regalbrettern, und auf der Oberseite für die Funktion eines Spülbeckens oder einer weiteren Kochmulde, welche nach Möglichkeit zwischen den beiden entsprechenden Tragstrukturen von jeweils einer Kochmulde positioniert sind, wobei diese Kochmulde, da sie austauschbar ist, auch eine andere Konfiguration aufweisen kann als die entgegengesetzte.

5. Zusatzelement für die Kücheneinrichtung für den Innen-/Außenbereich gemäß den vorstehenden Patentansprüchen, **dadurch gekennzeichnet, dass** an jedem unteren Ende von wenigstens zwei Ständern (2) Räder (11) eingesetzt sind.

6. Zusatzelement für die Kücheneinrichtung für den Innen-/Außenbereich gemäß den vorstehenden Patentansprüchen, **dadurch gekennzeichnet, dass** wenigstens ein Ständer (2) am unteren Ende einen verstellbaren Fuß (12) aufweist.

7. Zusatzelement für die Kücheneinrichtung für den Innen-/Außenbereich gemäß den vorstehenden Patentansprüchen, **dadurch gekennzeichnet, dass** sich an jedem jeweils oberen (20) und unteren (21) Ende jedes Ständers (2) eine Doppelschulter (22) befindet, eine diametral der anderen entgegengesetzt, wobei wenigstens eine Schulter einen Schlitz aufweist für die Aufnahme einer quer positionierten Verankerungszunge (3), die bezüglich des Ständers (2) mit einem zum Ständer rechtwinklig stehenden, breiten Stützende herausragt.

8. Zusatzelement für die Kücheneinrichtung für den Innen-/Außenbereich gemäß Patentanspruch 7, **dadurch gekennzeichnet, dass** die Verankerungszunge (3) ein im Wesentlichen flaches Metallelement ist, mit einem herausragenden Ende, das breiter ist als das entgegengesetzte, an der Schulter befestigte Ende, wobei es am oberen Ende (20) der Ständer (2) am Umfang Halt für die runde Platte (80) bietet, welche die Kochmulde (8) bildet.

9. Zusatzelement für die Kücheneinrichtung für den Innen-/Außenbereich gemäß den vorstehenden Patentansprüchen, **dadurch gekennzeichnet, dass** die runde Platte (80), welche die Kochmulde (8) bildet und die Heiz- und Gareinrichtungen trägt, entlang eines Abschnitts ihrer selbst die jeweiligen Bedienelemente zur Kontrolle der Betriebstemperatur der Heiz- und Gareinrichtungen aufweist.

10. Zusatzelement für die Kücheneinrichtung für den Innen-/Außenbereich gemäß den vorstehenden Patentansprüchen, **dadurch gekennzeichnet, dass** die Verkleidungspaneele (5) der Tragstruktur durch U-förmige Verbindungsflansche (7) mit den Ständern (2) verbunden sind.

11. Zusatzelement für die Kücheneinrichtung für den Innen-/Außenbereich gemäß den vorstehenden Patentansprüchen, **dadurch gekennzeichnet, dass** die runde, die Kochmulde bildende und die Heiz- und Gareinrichtungen tragende Platte (80) über ihren Verlauf zwei halbrunde Aufnahmen aufweist, von denen jede das Profil des entsprechenden Ständers (2), mit dem sie verbunden ist, umgibt.

12. Zusatzelement für die Kücheneinrichtung für den Innen-/Außenbereich gemäß den vorstehenden Patentansprüchen 2 - 11, **dadurch gekennzeichnet, dass** das Ringelement(15) das Einrichtungs-Zusatzelement (1A) umgibt.

13. Zusatzelement für die Kücheneinrichtung für den Innen-/Außenbereich gemäß den vorstehenden Patentansprüchen, **dadurch gekennzeichnet, dass** die kombinierte Tragstruktur aus einer ersten und einer zweiten Tragstruktur besteht, wobei das Verkleidungspaneel fehlt an den beiden, einander zugewandten Seite der beiden Strukturen, die mittels eines Bodens (13) miteinander verbunden sind, der die beiden Tragstrukturen im unteren Teil verbindet, sowie mittels eines Tops (14), das die beiden Tragstrukturen im oberen Teil verbindet, sowie mittels einer Rückwand (16).

14. Zusatzelement für die Kücheneinrichtung für den Innen-/Außenbereich gemäß Patentanspruch 13, **dadurch gekennzeichnet, dass** der Boden (13) Öffnungen (130) an der Rückseite aufweist zur Durchleitung möglicher Anschlüsse sowohl für Schläuche als auch für elektrische Leitungen zur Versorgung der enthaltenen Geräte, und dass er an den Seitenenden entlang am Boden (13) jeder Tragstruktur fixiert ist, während das obere Verbindungs-Top (14) derartig beschaffene Seitenenden aufweist, das zwei einander gegenüberliegende, halbrunde Aufnahmen (140, 142) vorhanden sind, von denen jede mit einander gegenüberliegenden Abschluss-Halbinseln endet, wobei diese Halbinseln in das obere Ende (20) von zwei Ständern (2) eingesetzt sind.

15. Zusatzelement für die Kücheneinrichtung für den Innen-/Außenbereich gemäß Patentanspruch 7, **dadurch gekennzeichnet, dass** gegen die Schultern (22) des oberen Endes (20) von wenigstens einem der Ständer (2) ein Flacharm (9) befestigt ist, der rechtwinklig zum entsprechenden Ständer (2) steht und aus der Tragstruktur eines ersten Kocheinrichtungs-Zusatzelements (1A) herausragt und einen Ring (15) trägt, der das obere Ende der Tragstruktur des Kocheinrichtungs-Zusatzelements (1A) von außen umgibt.

## Revendications

1. Accessoire d'ameublement pour la cuisine (1A) du type pour l'extérieur/intérieur, munie d'appareils pour la cuisson d'aliments et d'une structure de support par éléments pour plan de cuisson d'un plan de cuisson interchangeable (8), **caractérisé en ce que** la structure de support par éléments du plan de cuisson se compose d'au moins trois montants tubulaires (2), où, à hauteur de l'extrémité inférieure, un fond (4) est fixé, entouré autour du périmètre par au moins un panneau de revêtement vertical (5) fixée, elle aussi, auxdits montants (2), et une porte (6) dotée de charnières latérales, ledit panneau (5) et ladite porte (6) étant courbes et où, à hauteur de la partie supérieure de la structure de support par éléments du plan de cuisson, le plan de cuisson interchangeable (8) est fixé aux extrémités supérieures desdits montants (2) comprenant une plaque circulaire (80), les moyens de chauffage et cuisson, et les commandes relatives pour contrôler la température de service des moyens de chauffage et cuisson, se trouvant le long de la partie frontale du plan de cuisson (8).

2. Accessoire d'ameublement pour la cuisine, du type pour l'extérieur/intérieur, selon la revendication 1 **caractérisé en ce qu'**un élément en anneau (15) est positionné en saillie par rapport à au moins une structure de support du plan de cuisson.

3. Accessoire d'ameublement pour la cuisine, du type pour l'extérieur/intérieur, selon les revendications 1 et 2 **caractérisé en ce que** ladite structure de support par éléments du plan de cuisson est intégrée dans un accessoire d'ameublement qui prévoit une deuxième structure de support du plan de cuisson.

4. Accessoire d'ameublement pour la cuisine, du type pour l'extérieur/intérieur, selon les revendications précédentes **caractérisé en ce que** l'accessoire d'ameublement qui se compose de deux structures de support du plan de cuisson reliées entre elles par de moyens de raccordement, présente une zone intermédiaire destinée à d'autres fonctions, comme la fonction de four, de réfrigérateur, de congélateur, de lave-vaisselle, ou tout simplement de compartiment muni de tablettes, et sur la partie supérieure la fonction de vaisselle ou d'un plan de cuisson supplémentaire, ceux-ci pouvant être positionnés entre lesdites deux structures de support analogues, chacune d'un plan de cuisson correspondant, où ledit plan de cuisson, étant interchangeable, peut être également du type avec une configuration différente par rapport à celui opposé.

5. Accessoire d'ameublement pour la cuisine, du type pour l'extérieur/intérieur, selon les revendications précédents **caractérisé en ce que** des roues (11) sont fixées à hauteur de chaque extrémité inférieure d'au moins deux montants (2).

6. Accessoire d'ameublement pour la cuisine, du type pour l'extérieur/intérieur, selon les revendications précédentes **caractérisé en ce qu'**au moins un montant (2) présente un pied réglable à hauteur de l'extrémité inférieure.

7. Accessoire d'ameublement pour la cuisine, du type pour l'extérieur/intérieur selon les revendications précédentes **caractérisé en ce qu'**à hauteur de chaque extrémité de chaque montant (2), respectivement supérieur (20) et inférieur (21), se trouve un double épaulement (22), l'un diamétralement opposé à l'autre, où au moins un épaulement est équipé d'une fente pour accueillir transversalement une languette de fixation (3), qui fait saillie par rapport audit montant (2) avec une extrémité de support large orthogonale par rapport audit montant.

8. Accessoire d'ameublement pour la cuisine, du type pour l'extérieur/intérieur, selon la revendication 7 **caractérisé en ce que** ladite languette de fixation (3) est un élément métallique essentiellement plat avec une extrémité saillante plus large que l'extrémité opposée qui est fixée à l'épaulement, où, à hauteur de l'extrémité supérieure (20) des montants (2), soutient sur le périmètre la plaque circulaire (80) qui compose le plan de cuisson.

9. Accessoire d'ameublement pour la cuisine, du type pour l'extérieur/intérieur, selon les revendications précédentes **caractérisé en ce que** la plaque circulaire (80), qui compose le plan de cuisson (8) et qui soutient les moyens de chauffage et cuisson, présente le long d'une zone de celle-ci les commandes correspondantes pour contrôler la température de service des moyens de chauffage et cuisson.

10. Accessoire d'ameublement pour la cuisine, du type pour l'extérieur/intérieur, selon les revendications précédentes **caractérisé en ce que** les panneaux de revêtement (5) de la structure de support sont reliées aux montants (2) par des brides de raccordement (7) en "U".

11. Accessoire d'ameublement pour la cuisine, du type pour l'extérieur/intérieur, selon les revendications précédentes **caractérisé en ce que** la plaque circulaire (80), qui compose le plan de cuisson et qui soutient les moyens de chauffage et cuisson, présente le long de celle-ci deux sièges semi-circulaires, chacun limitant le profil du montant correspondant (2) auquel il est relié.

12. Accessoire d'ameublement pour la cuisine, du type pour l'extérieur/intérieur, selon les revendications précédentes 2 - 11 **caractérisé en ce que** l'élément en anneau (15) entoure l'accessoire d'ameublement (1A).

13. Accessoire d'ameublement pour la cuisine, du type pour l'extérieur/intérieur, selon les revendications précédentes **caractérisé en ce que** la structure de support par éléments se compose d'une première et d'une deuxième structure de support, chacune étant dépourvue du panneau du côté des deux structures qui se montrent réciproquement et qui sont reliées entre elles au moyen d'un fond (13) qui relie inférieurement les deux structures de support, au moyen d'un plan (14) qui relie supérieurement lesdites deux structures de support, et d'un dos (16).

14. Accessoire d'ameublement pour la cuisine, du type pour l'extérieur/intérieur, selon la revendication 13 **caractérisé en ce que** le fond (13) est muni d'ouvertures (130) dans la partie arrière pour le passage de connexions éventuelles, aussi bien des tuyaux que des connexions électriques pour l'alimentation des accessoires supportés, et est fixé le long des extrémités latérales à hauteur du fond (13) de chaque structure de support, tandis que le plan de raccordement supérieur (14) présente ses extrémités latérales réalisées de manière à prévoir deux sièges semi-circulaires opposés (140, 142), chacune se terminant par des péninsules d'extrémité et opposées, lesdites péninsules étant engagées à hauteur de l'extrémité supérieure (20) de deux montants (2).

15. Accessoire d'ameublement pour la cuisine, du type pour l'extérieur/intérieur, selon la revendication 7 **caractérisé en ce que** contre les épaulements (22) de l'extrémité supérieure (20) d'au moins un des montants (2) est engagé un bras plat (9) qui, étant orthogonal par rapport au montant correspondant (2), avance vers l'extérieur de la structure de support d'un premier accessoire d'ameublement pour la cuisine (1A) et soutient un anneau (15) qui entoure extérieurement l'extrémité supérieure de la structure de support de l'accessoire d'ameublement pour la cuisine (1A).
